# EUROPEAN PATENT SPECIFICATION

(11) **EP 1 690 045 B1**
(45) Date of publication and mention of the grant of the patent: **26.05.2010**
(21) Application number: 04791700.0
(22) Date of filing: 15.10.2004
(51) Int. Cl.: F24F 7/08, F24F 12/00, F24F 11/00

(54) **WALL MOUNTED VENTILATION DEVICE**
WANDMONTIERTE VENTILATIONSVORRICHTUNG
DISPOSITIF VENTILATEUR A MONTAGE MURAL

(30) Priority: 15.10.2003 IT TO20030810
(43) Date of publication of application: 16.08.2006
(73) Proprietor: Nova Engineering SAS di Mario Palazzetti & C., 10051 Avigliana (IT)
(72) Inventor: PALAZZETTI, Mario, I-10051 Avigliana (IT)
(74) Representative: Marchitelli, Mauro
(86) International application number: PCT/IB2004/003370
(87) International publication number: WO 2005/038355

(56) References cited:
- EP-A- 0 014 863
- DE-A1- 3 519 947
- US-A- 5 460 222
- US-A- 5 761 908
- US-A1- 2003 159 802

## Description

The present invention relates to a ventilation device for treatment of the air in an environment.

Renewal of the air is of fundamental importance for ensuring the healthiness of the environments used for living in or for performing a wide variety of activities since it prevents the formation of moulds, helps eliminate harmful vapours produced by glues, waxes or other substances contained in household cleaning products, etc.

The problem of radon may also be dealt with and solved only by suitable renewal of the air.

The treatment of the renewed air also helps prevent the introduction of external polluting agents or allergy-producing substances, such as pollen and dust in general, which result in the need for a greater amount of cleaning of the environments.

In many cases the conditioned air is perceived as being "unhealthy" precisely because the renewal of the environmental air is insufficient.

It is true that air-conditioning plants which envisage distribution of the treated air may provide good quality air, but they are costly and bulky, require major maintenance and are not suitable for installation in buildings undergoing renovation and in homes in general, among other things owing to the intrinsic problems associated with adjustment and distribution of the costs.

Renewal of the air is therefore necessary and important, but is uneconomic in the terms of the amount of energy used.

US-A-5761908 discloses a self-contained ventilation apparatus for ventilating buildings. A first blower is provided for discharging room air to the atmosphere and a second blower is provided for introducing fresh outside air to the room to provide a continuous supply of fresh air to the room which is free of disease organisms. Both streams of air pass through an air-to-air heat exchanger to adjust the temperature of the incoming air to approach that exhausted from the room. When filters are used, both currents of air are preferebly filtered. Another example of a self-contained ventilation apparatus for ventilating buildings is disclosed in document DE-3006318-A.

The invention is directed to a still in which a ventilation unit is integrated, as defined in claim 1. The invention will now be described by way of a nonlimiting example with reference to the accompanying drawings.

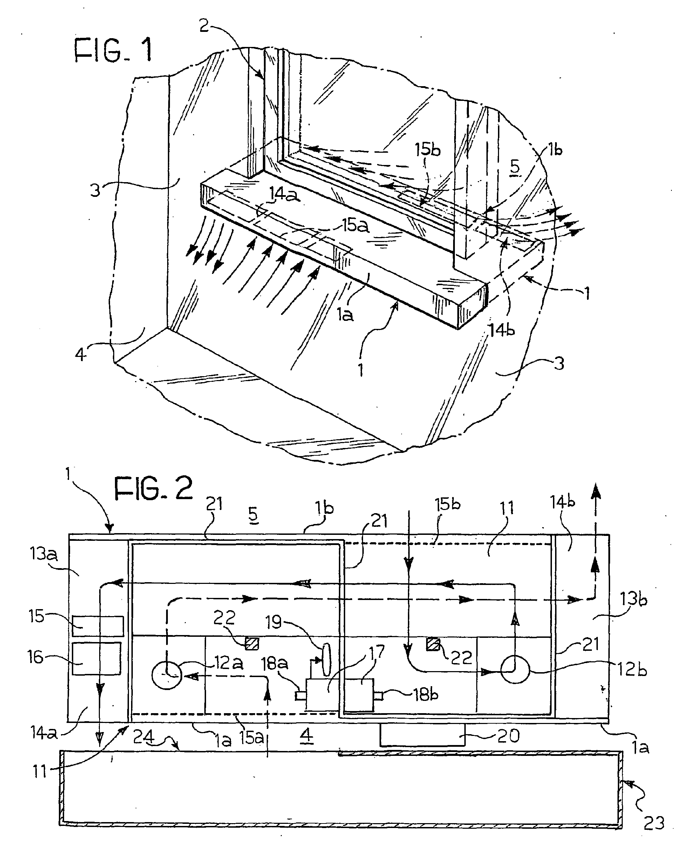

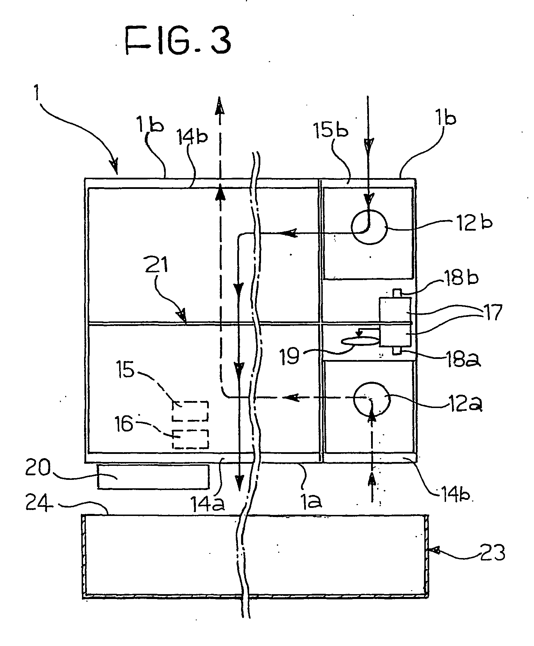

Figure 1 shows a perspective view of a sill according to the invention, arranged underneath a window 2 and which passes through a wall 3 which separates an internal environment 4, such as a room, in a building from the environment outside the building.

The sill 1 in the example shown has an essentially rectangular shape in plan view and has an inner edge 1a which extends inside the environment or room 4 and preferably projects from the wall 3 and an outer edge 1b which extends inside the environment 5 outside the building, this edge 1b preferably projecting from the outer side of the wall 3.

The sill 1 is shown in Figure 2 in a very schematic illustration, substantially viewed from above.

This sill replaces or may be arranged underneath or above the usual slab of stone or other material, which is normally used as a sill.

The sill 1 is internally hollow and houses inside it the various devices which will be described now.

With particular reference to Figure 2, the sill 1 has, installed inside it, a plate heat exchanger 11 which is connected to two fans 12a and 12b of the centrifugal type. The exchanger 11 extends between two end headers 13a and 13b which respectively communicate with the internal environment 4 and with the external environment 5 by means of corresponding openings 14a and 14b. These openings are preferably formed in the bottom surfaces of the projecting portions of the inner side 1a and outer side 1b of the board 1, respectively (see also Figure 1).

The fans 12a and 12b induce intersecting flows of air through separate compartments of the exchanger 11. In particular, the fan 12a when activated draws an air flow from the environment 4 through an opening 15a adjacent to the opening 14a (see also Figure 1) and then through the exchanger 11 along a path shown as a broken line in Figure 2. The air flow drawn from the internal environment 4 is then forced into the outlet header 13b and flows out into the external environment through the opening 14b.

The fan 12b instead sucks in a flow of air from the external environment 5 into the exchanger 11 and forces it along a path represented by a continuous line in Figure 2, in the opposite direction of flow to the air flow induced by the fan 12a. The air drawn from the external environment 5 passes from the exchanger 11 to the header 13a and is then introduced into the internal environment 4 through the opening 14a.

The header 13a may conveniently have arranged internally a heat exchanger 15, for example of the water/air type, for heating or cooling the air, and an active-carbon adsorption and filtering device 16 for removal of the dust and any polluting agents. The header 13a may have its bottom wall inclined downwards in the direction of the external environment 5 so as to be able to discharge the condensate through one or more openings provided on the outer side 1b of the board 1.

The operation of the devices described above and of those described further below is conveniently controlled by an electronic unit 17 which is preferably mounted inside the board 1, depending on temperature signals supplied by sensors 18a and 18b which detect the temperatures of the air drawn from the internal environment 4 and the air drawn from the external environment 5, respectively.

The sill 1 conveniently has, mounted inside it, an electric heating device 19 which is intended to be activated by the unit 17 so as to cause regeneration of the active carbons of the adsorption and filtering device 16.

In Figure 2, 20 denotes overall electric/electronic devices for performing domotic functions, which will be described further below. Although in Figure 2 these devices are shown as mounted onto the outside of the board 1, they may also be installed inside the sill.

21 denotes generically an air-tight seal which extends inside the sill.

22 denotes two spacers or pillars having the function of discharging the stresses applied by any loads placed on top of the sill.

23 denotes a container essentially in the form of a box, provided with an opening 24 and intended to be applied to the bottom surface of the projecting portion of the inner side 1a of the sill 1 when regeneration of the adsorption and filtering device 16 is performed. The opening 24 of the container 23 embraces the adjacent openings 14a and 15a, so that this container redirects towards the opening 15a the air leaving the opening 14a, preventing the air leaving the opening 14a from being introduced into the internal environment 4 during regeneration.

During regeneration the fans 12a and 12b are activated simultaneously.

The sill may be mounted so that it is exposed or may be lined with finishing materials in accordance with widely varying stylistic requirements.

In examples of embodiment not shown, the sill 1 may be extracted from a kind of housing or drawer wall-mounted in place of a conventional sill.

A sill 1, of the type described above, may incorporate various electric/electronic devices, for domotic applications such as, for example, power sockets, switches, light intensity sensors, ambient temperature sensors, anti-intrusion sensors, smoke and/flame sensors, calorie/frigorie counters, sockets for television signals and for connection to computer networks, telephone sockets, etc.

During normal operation, the air inside the environment 4 is sucked in by the fan 12a through the opening 15a and is injected into the heat exchanger 11, via which it reaches the discharge header 13b and then reaches the external environment 5 through the opening 14b. In a similar manner, the air taken from the external environment 5 enters into the sill through the opening 15b, and by means of the fan 12b is forced through the exchanger 11 and reaches the header 13a and then the internal environment 4 through the opening 14a. In winter the air from outside is heated with the heat which the exchanger 11 recovers from the air directed from the internal environment 4 towards the external environment 5. In summer the air from outside is cooled, again by means of the heat exchanger 11.

The air introduced into the internal environment 4 is filtered and deodorized by the devices 16 and if necessary brought to the desired temperature by means of the exchanger 15.

The control unit 17 may be set as to operate the fitted-out sill 1 in a first mode, where the thermal energy is recovered, a second mode where the heat recovery exchanger is excluded, and a third mode or mode for regeneration of the adsorption and filtering devices 16.

In the first mode both the fans 12a and 12b are activated and, via the exchanger 11, the thermal energy is recovered during the course of air renewal.

The second mode is employed in winter, when the temperature in the external environment 5 is higher than that inside the internal environment 4, or in summer, when the temperature in the external environment 5 is lower than the temperature in the internal environment 4. In this case only the fan 12b operates and draws the air from the external environment 5 so as to direct it towards the internal environment 4.

The third mode, which is activated after connecting the container 23 to the board 1, allows regeneration of the adsorption and filtering devices 16. In this case both the fans 12a and 12b operate and the heater 9 is activated so that the temperature of the filtering devices 16 reaches values suitable for performing sterilization of the filters and regeneration of the active carbon.

Figure 2 shows a variation of embodiment, in particular suitable for use in small-size openings or windows. In this figure parts and elements already described have been again assigned the same reference numbers used previously.

## Claims

1. Sill intended to be mounted in a wall (3) separating an internal environment (4) of a building and an external environment (5), comprising:
- a hollow casing (1) having in a plan view an essentially rectangular shape and having an inner edge (1a) which in use extends inside the internal environment (4) and an outer edge (1b) which in use extends in the external environment (5),
- a plate heat exchanger (11) arranged inside said hollow casing (1) and extending between a first and a second header (13a, 13b) which respectively communicate with the internal environment (4) and with the external environment (5) by means of respective openings (14a, 14b) of the hollow casing (1),
- two centrifugal electric fans (12a, 12b), able to induce through the heat exchanger (11) a first air flow from said internal environment (4) to the external environment (5) and a second air flow from the external environment (5) to the internal environment (4) so as to perform renewal of the air in said internal environment (4), the heat exchanger (11) recovering thermal energy from said first air flow and releasing said thermal energy to said second air flow,
**characterized in that** said first header (13a) contains filtering and adsorption means (16) for filtration and adsorption of the pollutants from said second air flow, controlled heating means (19) being provided to perform regeneration and sterilization of said filtering and adsorption means (16).

2. A sill according to Claim 1, comprising an electronic control unit (17) set to drive said electric fans (12a, 12b) in predetermined modes.

3. A sill according to Claim 2, in which the control unit (17) is set to activate both the fans (12a, 12b) or to activate only the fan (12b) which induces said second air flow.

4. A sill according to Claim 2, wherein said casing (1) comprises internal reinforcing means (22) able withstand the stresses of any loads placed on the sill.

5. A sill according to Claim 1, comprising electric/electronic devices (20) for domotic applications.

## Patentansprüche

1. Fensterbank für die Montage in einer Wand (3), die eine Innenumgebung (4) eines Gebäudes von einer Außenumgebung (5) trennt, enthaltend:
- ein hohles Gehäuse (1), das in einer Aufsicht eine im wesentlichen rechteckige Form hat und eine Innenkante (1a), die sich bei Verwendung in der Innenumgebung (4) erstreckt, sowie eine Außenkante (1 b) aufweist, die sich in Verwendung in der Außenumgebung (5) erstreckt,
- einen Plattenwärmetauscher (11), der in dem hohlen Gehäuse (1) angeordnet ist und sich zwischen einem ersten und einem zweiten Kopfteil (13a, 13b) erstreckt, die mit der Innenumgebung (4) bzw. mit der Außenumgebung (5) mit Hilfe entsprechender Öffnungen (14a, 14b) des hohlen Gehäuses in Verbindung stehen, und
- zwei elektrische Zentrifugallüfter (12a, 12b), die in der Lage sind, durch den Wärmetauscher (11) einen ersten Luftstrom von der Innenumgebung (4) zur Außenumgebung (5) und einen zweiten Luftstrom von der Außenumgebung (5) zur Innenumgebung (4) zu leiten, um so eine Lufterneuerung in der Innenumgebung (4) herbeizuführen, wobei der Wärmetauscher (11) Wärmeenergie aus dem ersten Luftstrom zurückgewinnt und diese Wärmeenergie an den zweiten Luftstrom abgibt,
**dadurch gekennzeichnet, dass** der erste Kopfteil (13a) eine Filter- und Adsorptionseinrichtung (16) für die Filterung und Adsorption von Schmutzstoffen aus dem zweiten Luftstrom enthält und eine gesteuerte Heizeinrichtung (19) vorgesehen ist, die eine Regeneration und Sterilisation der Filter- und Adsorptionseinrichtung (16) durchführt.

2. Fensterbank nach Anspruch 1, enthaltend eine elektronische Steuereinheit (17), die dazu eingerichtet ist, die elektrischen Lüfter (12a, 12b) in vorbestimmten Betriebsarten anzusteuern.

3. Fensterbank nach Anspruch 2, bei der die Steuereinheit (17) dazu eingerichtet ist, sowohl beide Lüfter (12a, 12b) als auch nur den Lüfter (12b) zu aktivieren, der den zweiten Luftstrom erzeugt.

4. Fensterbank nach Anspruch 2, bei der das Gehäuse (1) eine innere Aussteifungseinrichtung (22) enthält, die den Beanspruchungen beliebiger Belastungen widerstehen kann, die auf die Fensterbank wirken.

5. Fensterbank nach Anspruch 1, enthaltend elektrische/elektronische Vorrichtungen (20) für haustechnische Anwendungen.

## Revendications

1. Seuil prévu pour être monté dans une paroi (3) séparant un environnement intérieur (4) d'un bâtiment et un environnement extérieur (5), comprenant :
un boîtier creux (1) ayant, sur une vue en plan, une forme essentiellement rectangulaire et ayant un bord interne (1a) qui, à l'usage, s'étend à l'intérieur de l'environnement intérieur (4) et un bord externe (1b) qui, à l'usage, s'étend dans l'environnement extérieur (5),
un échangeur de chaleur à plaques (11) agencé à l'intérieur dudit boîtier creux (1) et s'étendant entre un premier et un second collecteur (13a, 13b) qui communiquent respectivement avec l'environnement intérieur (4) et avec l'environnement extérieur (5) au moyen d'ouvertures (14a, 14b) respectives du boîtier creux (1),
deux ventilateurs électriques centrifuges (12a, 12b) pouvant induire par le biais de l'échangeur de chaleur (11), un premier écoulement d'air provenant dudit environnement intérieur (4) jusqu'à l'environnement extérieur (5) et un second écoulement d'air de l'environnement extérieur (5) à l'environnement intérieur (4) afin de réaliser le renouvellement de l'air dans ledit environnement intérieur (4), l'échangeur de chaleur (11) récupérant l'énergie thermique dudit premier écoulement d'air et libérant ladite énergie thermique audit second écoulement d'air,
**caractérisé en ce que** ledit premier collecteur (13a) contient des moyens de filtration et d'adsorption (16) pour la filtration et l'adsorption des polluants dudit second écoulement d'air, des moyens de chauffage contrôlés (19) étant prévus pour réaliser la régénération et la stérilisation desdits moyens de filtration et d'adsorption (16).

2. Seuil selon la revendication 1, comprenant une unité de commande électronique (17) placée pour entraîner lesdits ventilateurs électriques (12a, 12b) selon des modes prédéterminés.

3. Seuil selon la revendication 2, dans lequel l'unité de commande (17) est placée pour activer les deux ventilateurs (12a, 12b) ou pour n'activer que le ventilateur (12b) qui induit ledit second écoulement d'air.

4. Seuil selon la revendication 2, dans lequel ledit boîtier (1) comprend des moyens de renforcement internes (22) pouvant résister aux contraintes de l'une quelconque des charges placées sur le seuil.

5. Seuil selon la revendication 1, comprenant des dispositifs électriques / électroniques (20) pour des applications domotiques.
